# EUROPEAN PATENT APPLICATION

(11) **EP 2 722 658 A1**
(43) Date of publication of application: **23.04.2014**
(21) Application number: 12398006.2
(22) Date of filing: 18.10.2012
(51) Int. Cl.: G01G 21/23, E04B 5/40, E04C 3/07

(54) **V-format structural profile with upper flaps to be applied to the panels that are part of the load receiving devices of equipment for the weighing of heavy equipment**

(71) Applicant: Barbal Pesagem Electrónica, LDA., 4705-384 Cabreiros BRG (PT)
(72) Inventor: Remiglio Paulo Fernandes Silva, 4755-302 Martim (PT)
(74) Representative: Lourenço Martinho do Rosário, Ana Margarida

(57) **Abstract**

This invention pertains to the V-format structural profiles with upper flaps that are part of the panels that make up the load receiving devices of equipment for the weighing of heavy equipment, usually named weighbridges "scales".

## Description

### Scope of Invention

This invention pertains to the field of weighbridges, more specifically to the field of the structural profiles that constitute the integrating panels for the load receiving devices that integrate the equipment for the weighing of heavy equipment, usually named weighbridges "scales".

### Background of the Invention

Various types of profiles are known in the art, which are used in the construction of the integrating panels for the load receiving devices of equipment for the weighing of heavy equipment, usually named weighbridges.

Of the types of profiles normally used, we highlight the use of the so-called profiles in standard steel, usually named IPE/UPN, whereby we can state that this type of profile has become a market standard, for it is the type of profile that adapts itself to the market's current needs, both for its robustness, as well as for its resistance.

Various patents for weighbridges show the profile mentioned above in its construction, as is the case mentioned in document no. EP1045230, or document no. EP0161103.

Another type of profile used is the U-profile in sheet metal, a solution that is seldom used as we can almost state that it presents more disadvantages than advantages, namely its low resistance and robustness.

### Advantages of the invention

This invention pertains to the V-shaped structural profiles with upper flaps that integrate the panels that constitute the load receiving devices of the equipment for the weighing of heavy equipment, usually named weighbridges.

Of this profile's various advantages, we can mention the fact that the use of the V-profiles allow for a more correct distribution of the loads, at the time of its use on the panels that make up the receiving devices of the load that integrate the weighbridge. Besides increasing the resistance, the introduction of the upper flaps allows for the complete elimination of impact edges, thus the deformations caused on this type of equipment resulting from normal use.

Another of the existing advantages is the fact that this type of profile allows for the manufacture of profiles and panels with sizes suited to each case, as long as the existing relationship between its various sizes is maintained. As it allows for the manufacture in sizes that prove to be suitable, the equipment may be modular, whereby it is portable, allowing for it to be moved wherever needed and then assembled there.

### Short description of the drawings

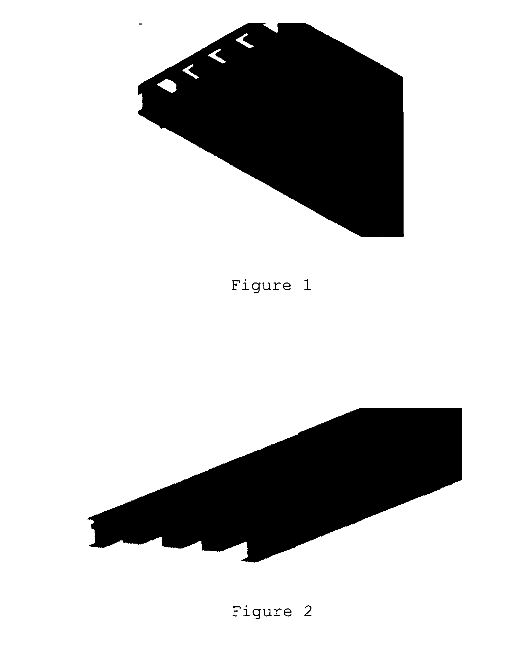

Figure 1 shows a panel made up of standard steel profiles, usually known as IPE/UPN.
Figure 2 shows a panel built from U-shaped sheet metal.

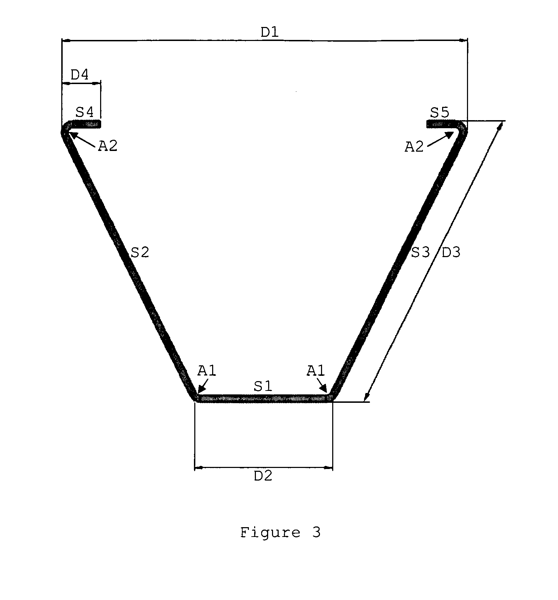

In Figure 3 we can see the shape of the V-format structural profile with upper flaps to be applied on the weighbridge, the objective of this invention.
Figure 4 shows a panel in which the panel's nucleus is made up of V-profiles, and standard IPE/UPN profiles at the ends.
Figure 5 shows a panel in which the entire panel is made up of V-profiles.
Figure 6 shows a potential assembly of the panels that incorporate the receiving devices of the load that is part of the weighbridges.

### Detailed description of the Invention

This invention pertains to the V-shaped structural profiles with upper flaps that are part of the panels which make up the receiving devices of load that are part of the weighbridges.

The V structural profile with upper flaps, the core element of this invention, is a profile that is especially suited to the manufacture of the modular panels that make up the load receiving devices that are part of the weighbridges.

It is a profile that can be manufactured in any material suited for the purpose, namely steel.

As long as the relationship between the sizes is maintained, it is possible to manufacture it in any size, thus adapting it to any need.

The structural profile is made up of five sections:
- an S1 horizontal section of length D2, adjacent to sections S2 and S3;
- an S2 section, adjacent to section S1, of length D3, with an internal angle A1, and adjacent to section S4;
- an S3 section, adjacent to section S1, of length D3, with an internal angle A1, and adjacent to section S5;
- an S4 horizontal section, adjacent to section S2. of length D4, with an internal angle A2;
- an S5 horizontal section, adjacent to section S3, of length D4, with an internal angle A2.

As the structural profile has a greater D1 width without any maximum or minimum value, the relationship of the D2:D1 size may vary between 1:1,5 and 1:2,5, more specifically between 1:1,9 and 1:2,1, more specifically 1:2. The relationship of the D3:D1 size may vary between 1:1 and 1:2, more specifically between 1:1,25 and 1:1,75, more specifically 1:1,405. The relationship of the D4:D1 size may vary between 1:5 and 1:15, more specifically between 1:7,5 and 1:12,5, more specifically 1:10.

The A1 angle has a fixed size and that can vary between 100° and 120°, more specifically between 107° and 113°, more specifically 110,556°. The A2 angle has a fixed size and that can vary between 60° and 80°, more specifically between 67° and 72° more specifically 69,444°.

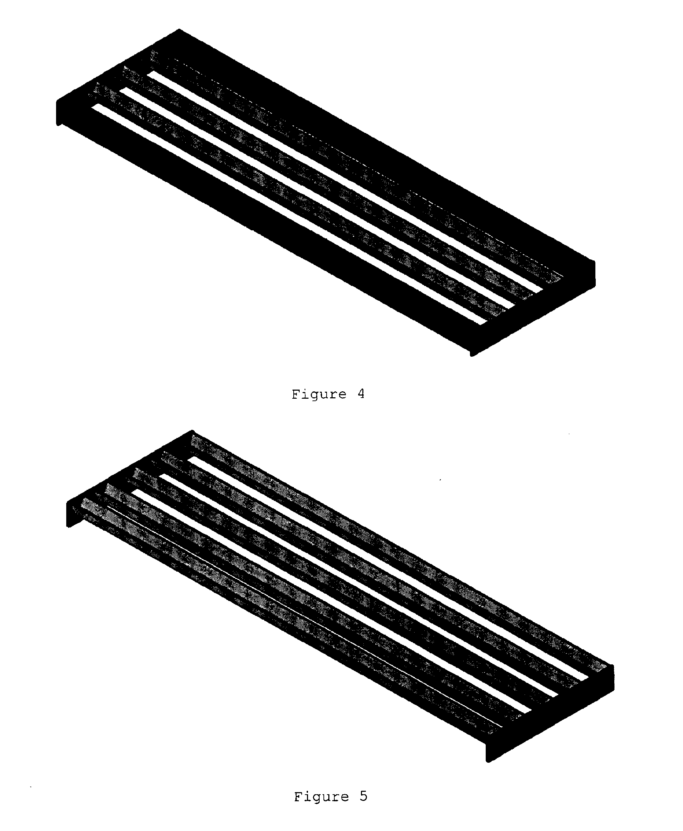

These structural profiles can then be applied on the panels that make up the load receiving devices that are part of the weighbridges "scales", which - as can be seen in Figure 4 - can complete said nucleus, whereby the profiles on the sides are standard IPE/UPN/other profiles. Another potential method of carrying this out is that shown in Figure 5, which is to apply the structural V-profiles throughout the panel.

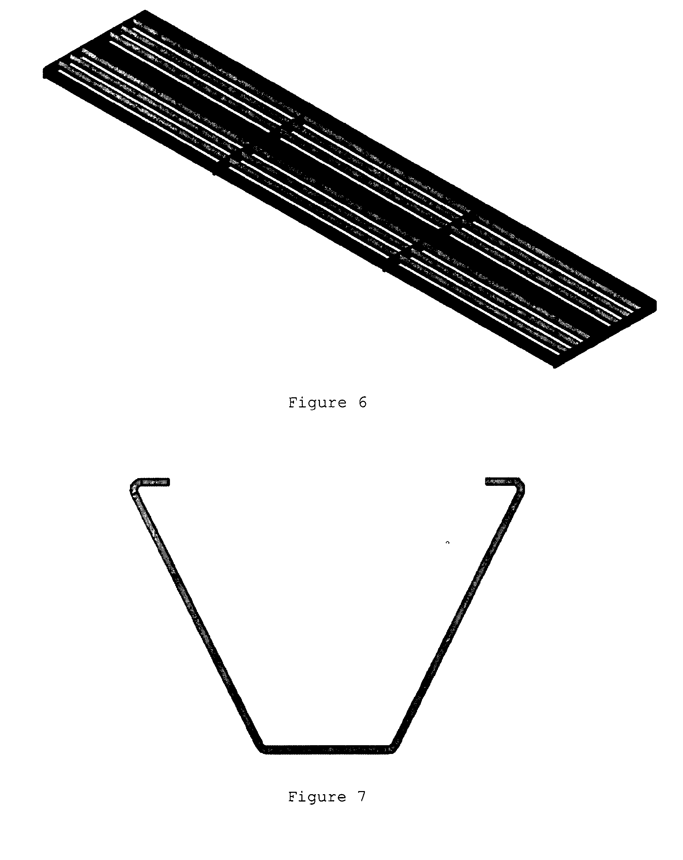

The various panels can then be attached, whereby a load receiving device is formed that integrates the weighbridge "scales", as can be seen in Figure 6.

## Claims

1. V-shaped structural profile with upper flaps that are part of the panels that make up the load receiving devices that are part of the weighbridges "scales" characterized as being made up of five sections:
- one S1 horizontal section of D2 length, adjacent to sections S2 and S3;
- one S2 section, adjacent to section S1, of D3 length, with an internal angle A1, and adjacent to section S4;
- one S3 section, adjacent to section S1, of D3 length, with an internal angle A1, and adjacent to section S5;
- one S4 horizontal section, adjacent to section S2, of D4 length, with an internal angle A2;
- one S5 horizontal section, adjacent to section S3, of D4 length, with an internal angle A2.

2. V-shaped structural profile with upper flaps that are part of the panels that make up the load receiving devices that are part of the weighbridges with claim no. 1 **characterized by** angle A1 having a fixed size and that can vary between 100° and 120°, more specifically between 107° and 113°, more specifically 110,556°.

3. V-shaped structural profile with upper flaps that are part of the panels that make up the load receiving devices that are part of the weighbridges in accordance with claim no. 1 **characterized by** angle A2 having a fixed size and that can vary between 60° and 80°, more specifically between 67° and 72° more specifically 69,444°.

4. V-shaped structural profile with upper flaps that are part of the panels that make up the load receiving devices that are part of the weighbridges in accordance with claim no. 1 **characterized by** the fact that relationship of the D2:D1 size may vary between 1:1,5 and 1:2,5, more specifically between 1:1,9 and 1:2,1, more specifically 1:2.

5. V-shaped structural profile with upper flaps that are part of the panels that make up the load receiving devices that are part of the weighbridges in accordance with claim no. 1 **characterized by** the fact that the relationship of the D3:D1 size may vary between 1:1 and 1:2, more specifically between 1:1,25 and 1:1,75, more specifically 1:1,405.

6. V-shaped structural profile with upper flaps that are part of the panels that make up the load receiving devices that are part of the weighbridges in accordance with claim no. 1 **characterized by** the fact that the relationship of the D4:D1 size may vary between 1:5 and 1:15, more specifically between 1:7,5 and 1:12,5, more specifically 1:10.

## Amended claims

### Amended claims in accordance with Rule 137(2) EPC.

**1.** V-shaped structural profile with upper flaps that are part of the panels that make up the load receiving devices that are part of the weighbridges "scales" being made up of five sections comprising:
- one S1 horizontal section adjacent to sections S2 and S3,
- one S2 section, adjacent to sections S1 and S4,
- one S3 section, adjacent to sections S1 and S5,
- one S4 horizontal section, adjacent to section S2, with an internal angle A2,
- one S5 horizontal section, adjacent to section S3, with an internal angle A2,
**characterized in that** the internal angle A2 is comprised between 60° and 80°.

**2.** V-shaped structural profile with upper flaps that are part of the panels that make up the load receiving devices that are part of the weighbridges "scales" in accordance with claim no. 1 **characterized in that** the internal angle A2 is between 67° and 72° more specifically 69,444°.

**3.** V-shaped structural profile with upper flaps that are part of the panels that make up the load receiving devices that are part of the weighbridges "scales" in accordance with claim no. 1 **characterized in that** is built namely in steel.

**4.** Panels that make up the load receiving devices that are part of the weighbridges "scales" **characterized in that** the panel's core is made up of V-profiles according to any of the claims 1 to 3, and standard IPE/UPN profiles at the ends.

**5.** Panels that make up the load receiving devices that are part of the weighbridges "scales" **characterized in that** all the entire panel is made up of V-profiles according to any of the claims 1 to 3.
